# EUROPEAN PATENT SPECIFICATION

(11) **EP 1 517 070 B1**
(45) Date of publication and mention of the grant of the patent: **14.07.2010**
(21) Application number: 04020926.4
(22) Date of filing: 02.09.2004
(51) Int. Cl.: F16H 63/20, F16H 63/34

(54) **Speed-change operation mechanism for manual transmission**
Gangschaltvorrichtung für manuelles Getriebe
Mécanisme de changement de vitesses pour transmission manuelle

(30) Priority: 19.09.2003 JP 2003328479
(43) Date of publication of application: 23.03.2005
(73) Proprietor: HONDA MOTOR CO., LTD., Tokyo (JP)
(72) Inventor: Haginiwa, Masahiro c/o Kabushiki Kaisha Honda Gijutsu Kenkyusho, Wako-shi Saitama-ken 351-0193 (JP); Matsuda, Kenji c/o Kabushiki Kaisha Honda Gijutsu Kenkyusho, Wako-shi Saitama-ken 351-0193 (JP); Kubo, Katsumi c/o Kabushiki Kaisha Honda Gijutsu Kenkyusho, Wako-shi Saitama-ken 351-0193 (JP); Koyama, Shigeru c/o Kabushiki Kaisha Honda Gijutsu Kenkyusho, Wako-shi Saitama-ken 351-0193 (JP); Iwasaki, Toru c/o Kabushiki Kaisha Honda Gijutsu Kenkyusho, Wako-shi Saitama-ken 351-0193 (JP)
(74) Representative: Herzog, Markus

(56) References cited:
- US-A- 3 929 029
- US-A- 4 277 983
- US-A- 4 507 981
- US-A- 4 621 537

## Description

### BACKGROUND OF THE INVENTION

### Field of the Invention

The present invention relates to a speed-change operation mechanism applicable to a manual transmission for a vehicle according to the preamble part of claim 1.

### Description of the Related Art

In a conventional manual transmission, a shift fork shaft is provided so as to perform a select action and a shift action in concert with a select operation and a shift operation of a speed-change operation member such as a change lever. Further, a plurality of shift forks are mounted on the shift fork shaft so as to be rotatable and axially movable. For example, Japanese Patent Publication No. Hei 2-21472 discloses a speed-change operation mechanism including a plurality of shift forks mounted on a common shift fork shaft so as to be rotatable and axially movable. In the speed-change operation mechanism disclosed in the above publication, an operating mechanism for moving each shift fork is mounted on another shaft different from the shift fork shaft. The operating mechanism is composed of a shift piece and an interlock member.

The shift forks are rotated about the shift fork shaft according to the select operation of the speed-change operation member, thereby establishing a desired select position. Thereafter, the selected shift fork is axially moved by the shift piece to establish a desired gear train. In the speed-change operation mechanism for the manual transmission described in the above publication, a plurality of shift forks are provided on one shaft. However, the operating mechanism including the shift piece and the interlock member for moving each shift fork is mounted on another shaft. Accordingly, a space for installing the shaft for mounting the operating mechanism is required.

US-A-4,507,981 discloses a generic speed-change operation mechanism according to the preamble part of claim 1, in which a speed-change operation member operates a shift select shaft that carries a plurality of shift forks, a shift piece and an interlock member, wherein the shift piece selectively engages with one of said shift forks. At a position between the shift select shaft and the distal ends of the shift forks, arm portions branch off the shift forks in a direction parallel to the shift select shaft. Distal ends of the arm portions have engagement grooves engageable with the shift piece.

For further illustration of the background art, reference can be made to US-A-3,929,029, US-A-4,621,537 and US-A-4,277,983 disclosing speed-change operation mechanisms in which shift forks are rotatably carried on a shift select shaft.

### SUMMARY OF THE INVENTION

It is therefore an object of the present invention to provide a speed-change operation mechanism for a manual transmission which can save the space and reduce the number of parts.

In accordance with an aspect of the present invention, there is provided a speed-change operation mechanism for a manual transmission according to claim 1. Such a mechanism comprises a speed-change operation member; a shift select shaft rotatable by a select operation of the speed-change operation member and axially movable by a shift operation of the speed-change operation member; a plurality of shift forks for forward gear trains, mounted on the shift select shaft so as to be relatively rotatable and axially movable; a shift piece fixed to the shift select shaft and adapted to perform a shift action in concert with the shift operation of the speed-change operation member, so that the shift piece selectively engages with one of the shift forks to axially displace the selected shift fork from a neutral position, thereby establishing a selected one of the forward gear trains; an interlock member mounted on the shift select shaft so as to be nonrotatable and axially movable and adapted to rotate the shift select shaft in concert with the select operation of the speed-change operation member, thereby establishing a selected one of select positions; and means for constraining the interlock member axially unmovably.

Preferably, the interlock member includes a pair of side plates splined to the shift select shaft so as to interpose the shift piece, a slit for insertion of the shift piece, and a pair of lock pawls for engaging any of the shift forks which the shift piece is not engaged, thereby constraining the shift forks at their neutral positions.

According to the present invention, the operating mechanism including the shift piece and the interlock member for moving each shift fork is provided on the shaft for mounting the plural shift forks. Accordingly, any additional shaft for mounting the operating mechanism is not required, thereby realizing space saving and a reduction in number of parts and in weight.

The above and other objects, features and advantages of the present invention and the manner of realizing them will become more apparent, and the invention itself will best be understood from a study of the following description and appended claims with reference to the attached drawings showing some preferred embodiments of the invention.

### BRIEF DESCRIPTION OF THE DRAWINGS

FIG. 1 is a longitudinal sectional view of a manual transmission to which the present invention is suitably applied;
FIG. 2 is a transverse sectional view showing the positional relation between each shaft and a speed-change operation mechanism in the manual transmission shown in FIG. 1;
FIG. 3 is a schematic diagram showing an operation pattern of a change lever;
FIG. 4 is a perspective view of the speed-change operation mechanism when a shift piece is located at a reverse select position;
FIG. 5 is a perspective view of the speed-change operation mechanism when the shift piece performs the shift action to a reverse position; and
FIG. 6 is a sectional view showing the positional relation between a reverse piece, a reverse fork operating member, and a reverse restriction member when the shift piece is located at the reverse select position.

### DETAILED DESCRIPTION OF THE PREFERRED EMBODIMENTS

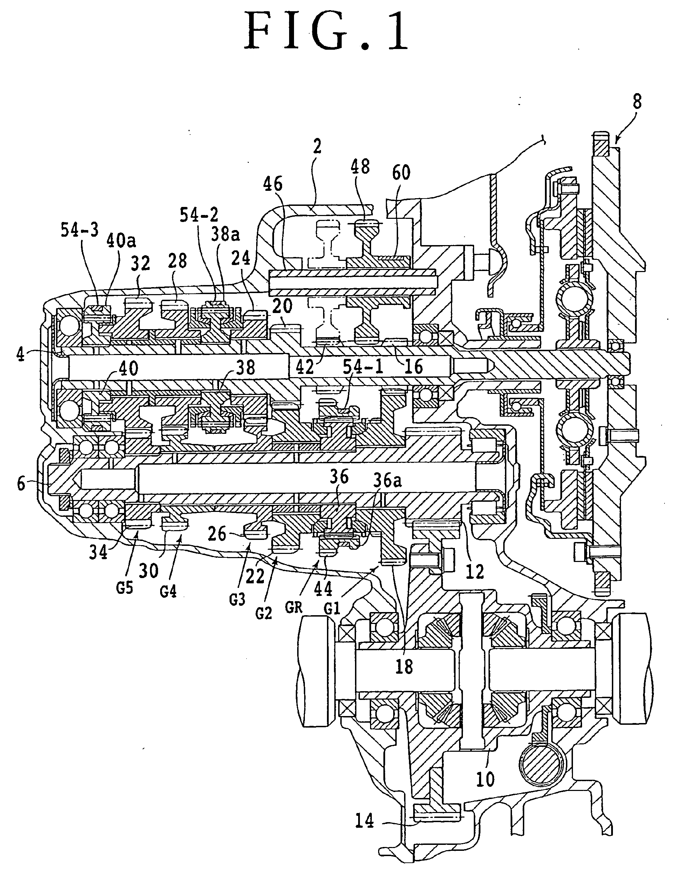

Referring to FIG. 1, there is shown a longitudinal sectional view of a manual transmission to which the present invention is suitably applied. This manual transmission includes a transmission case 2, a main shaft (input shaft) 4 provided in the transmission case 2, and a counter shaft (output shaft) 6 provided in the transmission case 2 so as to extend in parallel to the main shaft 4. The main shaft 4 is connected through a clutch 8 to an engine (not shown), and the counter shaft 6 is connected through a final drive gear 12 and a final driven gear 14 to a differential 10 for transmitting drive forces to right and left drive wheels of a vehicle. The clutch 8 is known in the art, so the detailed description thereof will be omitted herein.

A plurality of forward gear trains are arranged between the main shaft 4 and the counter shaft 6. The forward gear trains are a first speed gear train G1, second speed gear train G2, third speed gear train G3, fourth speed gear train G4, and fifth speed gear train G5 arranged in this order from the clutch 8 side. Further, a reverse gear train GR is located between the first speed gear train G1 and the second speed gear train G2. Thus, this manual transmission has five forward speeds and one reverse speed.

The first speed gear train G1 includes a drive gear 16 fixedly mounted on the main shaft 4 and a driven gear 18 rotatably mounted on the counter shaft 6. The drive gear 16 and the driven gear 18 are in mesh with each other. The second speed gear train G2 includes a drive gear 20 fixedly mounted on the main shaft 4 and a driven gear 22 rotatably mounted on the counter shaft 6. The drive gear 20 and the driven gear 22 are in mesh with each other.

The third speed gear train G3 includes a drive gear 24 rotatably mounted on the main shaft 4 and a driven gear 26 fixedly mounted on the counter shaft 6. The drive gear 24 and the driven gear 26 are in mesh with each other. The fourth speed gear train G4 includes a drive gear 28 rotatably mounted on the main shaft 4 and a driven gear 30 fixedly mounted on the counter shaft 6. The drive gear 28 and the driven gear 30 are in mesh with each other. The fifth speed gear train G5 includes a drive gear 32 rotatably mounted on the main shaft 4 and a driven gear 34 fixedly mounted on the counter shaft 6. The drive gear 32 and the driven gear 34 are in mesh with each other.

Changing of these speed gear trains is made by three synchromesh mechanisms 36, 38, and 40. The first synchromesh mechanism 36 is provided on the counter shaft 6 between the first speed driven gear 18 and the second speed driven gear 22. The second synchromesh mechanism 38 is provided on the main shaft 4 between the third speed drive gear 24 and the fourth sped drive gear 28. The third synchromesh mechanism 40 is provided on the main shaft 4 so as to be adjacent to the fifth speed drive gear 32.

The drive force of the main shaft 4 is transmitted to the counter shaft 6 through the speed gear train selected by the operation of the synchromesh mechanisms 36, 38, and 40 at any time except upon shifting. The drive force transmitted to the counter shaft 6 is further transmitted to the differential 10 after the rotational speed of the counter shaft 6 is reduced according to a final reduction ratio between the final drive gear 12 and the final driven gear 14. Accordingly, the drive wheels are rotated in the forward direction.

In the case of reverse running, all the synchromesh mechanisms 36, 38, and 40 are set to their neutral conditions. A reverse drive gear 42 is fixedly mounted on the main shaft 4, and a reverse driven gear 44 is formed integrally with a shift sleeve 36a of the synchromesh mechanism 36. The reverse drive gear 42 and the reverse driven gear 44 are not in direct mesh with each other, but they are arranged in a row. In this condition, a reverse idler gear 48 rotatably and slidably mounted on a reverse shaft 46 is axially slid on the reverse shaft 46 by a reverse fork 60 to come into mesh with both the reverse drive gear 42 and the reverse driven gear 44.

Accordingly, the drive force of the main shaft 4 is transmitted through the reverse drive gear 42, the reverse idler gear 48, and the reverse driven gear 44 to the counter shaft 6. Thus, the drive force of the main shaft 4 is transmitted through the reverse idler gear 48 to the counter shaft 6 upon reverse running, so that the rotational direction of the counter shaft 6 becomes opposite to that upon forward running. As a result, the drive wheels are rotated in the reverse direction. Although the reverse shaft 46 and the reverse idler gear 48 are shown above the reverse gears 42 and 44 in FIG. 1, so as to clearly show the structure of the reverse shaft 46 and the reverse idler gear 48, it should be noted that the reverse idler gear 48 is present at a position where it can mesh with both the gears 42 and 44.

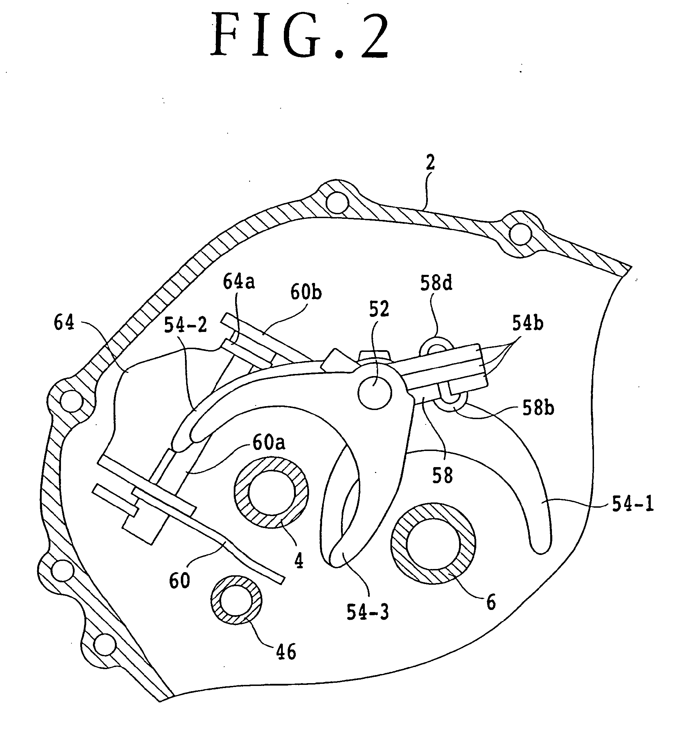

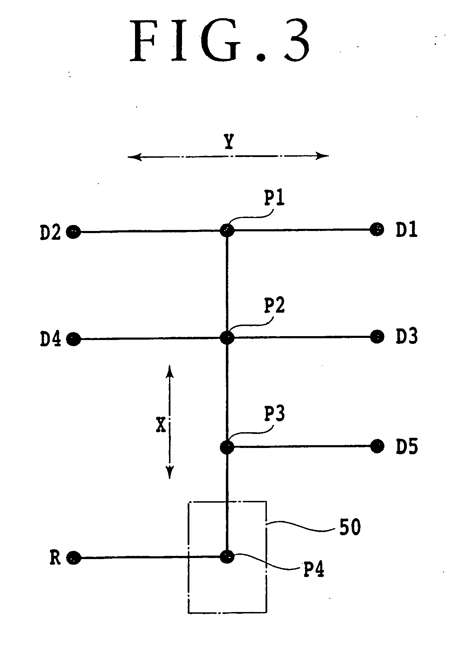

As shown in FIG. 2, the main shaft 4 and the counter shaft 6 are arranged substantially side by side, and the reverse shaft 46 is arranged substantially under the main shaft 4. Further, a shift select shaft (shift fork shaft) 52 interlocking with a change lever 50 (see FIG. 3) as a speed-change operation member is arranged over an intermediate position between the main shaft 4 and the counter shaft 6. Referring to FIG. 3, there is shown a schematic diagram of the operational directions of the change lever 50. The change lever 50 is arranged so that it can perform a select operation in the direction shown by an arrow X and a shift operation in the direction shown by an arrow Y perpendicular to the direction X of the select operation.

A first-second speed select position P1, a third-fourth speed select position P2, a fifth speed select position P3, and a reverse select position P4 are arranged in a line in the select operational direction. By performing the shift operation at the first-second speed select position P1, the change lever 50 can be moved to either a first speed position D1 where the first speed gear train G1 is established or a second speed position D2 where the second speed gear train G2 is established. By performing the shift operation at the third-fourth speed select position P2, the change lever 50 can be moved to either a third speed position D3 where the third speed gear train G3 is established or a fourth speed position D4 where the fourth speed gear train G4 is established. By performing the shift operation at the fifth speed select position P3, the change lever 50 can be moved to a fifth speed position D5 where the fifth speed gear train G5 is established. By performing the shift operation at the reverse select position P4, the change lever 50 can be moved to a reverse position R where the reverse gear train GR is established.

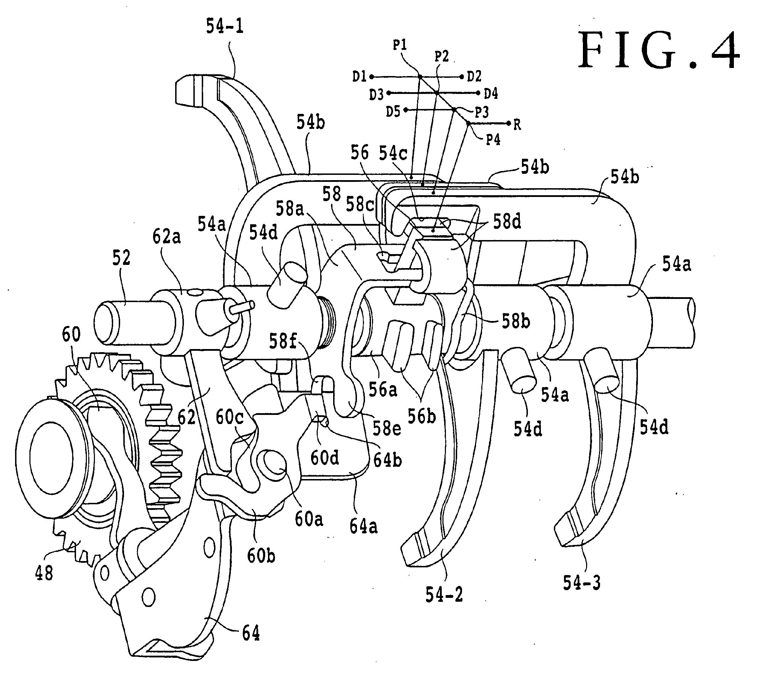

Referring again to FIG. 2, the axis of the shift select shaft 52 is parallel to the axes of the main shaft 4 and the counter shaft 6 along which shift forks 54-1, 54-2, and 54-3 are displaced. The shift select shaft 52 is rotatable in concert with the select operation of the change lever 50 and axially movable in concert with the shift operation of the change lever 50 through an interlocking mechanism (not shown). As shown in FIG. 4, the first-second speed shift fork 54-1, the third-fourth speed shift fork 54-2, and the fifth speed shift fork 54-3 are supported at their collar portions 54a as base portions to the shift select shaft 52 so as to be rotatable and axially movable relative to the shift select shaft 52.

The shift forks 54-1, 54-2, and 54-3 are engaged with shift sleeves 36a, 38a, and 40a, respectively, thereby stopping rotation. However, since the shift forks 54-1, 54-2, and 54-3 are rotatable relative to the shift select shaft 52, the rotation of the shift select shaft 52 is permitted. A shift piece 56 for selectively displacing the shift forks 54-1, 54-2, and 54-3 in the axial direction of the shift select shaft 52 is fixed at a collar portion 56a as a base portion to the shift select shaft 52. The shift piece 56 is located between the first-second speed shift fork 54-1 and the third-fourth speed shift fork 54-2.

The shift piece 56 rotates about the axis of the shift select shaft 52 (performs the select action of the shift select shaft 52) in concert with the select operation of the change lever 50, and axially moves the shift select shaft 52 (performs the shift action of the shift select shaft 52) in concert with the shift operation of the change lever 50. By performing the select action, the shift piece 56 rotationally displaces to the first-second speed select position P1, the third-fourth speed select position P2, the fifth speed select position P3, or the reverse select position P4 respectively corresponding to the select positions of the change lever 50.

By performing the shift action at the first-second speed select position P1, the shift piece 56 axially displaces to either the first speed position D1 or the second speed position D2. By performing the shift action at the third-fourth speed select position P2, the shift piece 56 axially displaces to either the third speed position D3 or the fourth speed position D4. By performing the shift action at the fifth speed select position P3, the shift piece 56 axially displaces to the fifth speed position D5. By performing the shift action at the reverse select position P4, the shift piece 56 axially displaces to the reverse position R. Each of the shift forks 54-1, 54-2, and 54-3 includes a fixed arm portion 54b extending from the collar portion 54a to a position over the shift piece 56. The arm portion 54b of the first-second speed shift fork 54-1 is located at a position corresponding to the first-second speed select position P1 of the shift piece 56.

Similarly, the arm portion 54b of the third-fourth speed shift fork 54-2 is located at a position corresponding to the third-fourth speed select position P2 of the shift piece 56, and the arm portion 54b of the fifth speed shift fork 54-3 is located at a position corresponding to the fifth speed select position P3 of the shift piece 56. Each arm portion 54b is formed with an engagement groove 54c which the shift piece 56 can engage.

When the shift piece 56 is located at the first-second speed select position P1, the shift piece 56 is engaged with the engagement groove 54c of the arm portion 54b of the first-second speed shift fork 54-1. At this time, by the shift action of the shift piece 56 to the first speed position D1 or the second speed position D2, the first-second speed shift fork 54-1 is axially displaced from the neutral position shown, thereby axially displacing the shift sleeve 36a of the first synchromesh mechanism 36 to result in the establishment of the first speed gear train G1 or the second speed gear train G2.

Similarly, when the shift piece 56 is located at the third-fourth speed select position P2, the shift piece 56 is engaged with the engagement groove 54c of the arm portion 54b of the third-fourth speed shift fork 54-2. At this time, by the shift action of the shift piece 56 to the third speed position D3 or the fourth speed position D4, the third-fourth speed shift fork 54-2 is axially displaced from the neutral position shown, thereby axially displacing the shift sleeve 38a of the second synchromesh mechanism 38 to result in the establishment of the third speed gear train G3 or the fourth speed gear train G4.

Further, when the shift piece 56 is located at the fifth speed select position P3, the shift piece 56 is engaged with the engagement groove 54c of the arm portion 54b of the fifth speed shift fork 54-3. At this time, by the shift action of the shift piece 56 to the fifth speed position D5, the fifth speed shift fork 54-3 is axially displaced from the neutral position shown, thereby axially displacing the shift sleeve 40a of the third synchromesh mechanism 40 to result in the establishment of the fifth speed gear train G5.

The collar portions 54a of the shift forks 54-1, 54-2, and 54-3 are provided with ball plungers 54d, respectively. Each ball plunger 54d cooperates with a recess (not shown) formed on the outer circumferential surface of the shift select shaft 52 to exhibit a detent function of elastically stopping the shift arms 54-1, 54-2, and 54-3 at the respective neutral positions and the respective shift positions for establishment of the respective speed gear trains. The shift select shaft 52 is provided with an interlock member (double mesh prevention member) 58 as straddling the shift piece 56. The interlock member 58 includes a pair of side plate portions 58a and 58b arranged on the axially opposite sides of the shift piece 56 and axially spaced a distance permitting the shift action of the shift piece 56.

The side plate portions 58a and 58b of the interlock member 58 are splined to the shift select shaft 52, thereby making the interlock member 58 integrally rotatable with the shift piece 56 and preventing rotation of the interlock member 58 relative to the shift select shaft 52. Further, to prevent movement of the interlock member 58 in association with the shift action of the shift piece 56, the interlock member 58 is constrained so as to be unmovable in the axial direction of the shift select shaft 52 as will be hereinafter described. The interlock member 58 is axially movable relative to the shift select shaft 52. Further, although the interlock member 58 is constrained so as to be unmovable in the axial direction of the shift select shaft 52, the shift select shaft 52 is axially movable.

The interlock member 58 further includes a slit 58c for insertion of the shift piece 56 and a pair of lock pawls 58d opposed to each other so as to interpose the upper end of the shift piece 56 adapted to engage the arm portion 54b of each shift fork, from the opposite sides in the direction of the select action of the shift piece 56. Either or both of the lock pawls 58d is/are engaged with the engagement grooves 54c of the arm portions 54b of the shift forks each being disengaged from the shift piece 56, so that these shift forks are constrained at their neutral positions.

More specifically, when the shift piece 56 is located at the first-second speed select position P1, one of the lock pawls 58d is engaged with the engagement grooves 54c of the arm portions 54b of the third-fourth speed shift fork 54-2 and the fifth speed shift fork 54-3, so that the third-fourth speed shift fork 54-2 and the fifth speed shift fork 54-3 are constrained at their neutral positions. Similarly, when the shift piece 56 is located at the third-fourth speed select position P2, both the lock pawls 58d are engaged with the engagement grooves 54c of the arm portions 54b of the first-second speed shift fork 54-1 and the fifth speed shift fork 54-3, so that the first-second speed shift fork 54-1 and the fifth speed shift fork 54-3 are constrained at their neutral positions.

Further, when the shift piece 56 is located at the fifth speed select position P3, one of the lock pawls 58d is engaged with the engagement grooves 54c of the arm portions 54b of the first-second speed shift fork 56-1 and the third-fourth speed shift fork 54-2, so that the first-second speed shift fork 54-1 and the third-fourth speed shift fork 54-2 are constrained at their neutral positions.

Further, when the shift piece 56 is located at the reverse select position P4, one of the lock pawls 58d is engaged with the engagement grooves 54c of the arm portions 54b of the first-second speed shift fork 54-1, the third-fourth speed shift fork 54-2, and the fifth speed shift fork 54-3, so that the first-second speed shift fork 54-1, the third-fourth speed shift fork 54-2, and the fifth speed shift fork 54-3 are constrained at their neutral positions. Accordingly, it is possible to prevent the occurrence of double mesh such that any one of the forward gear trains is established and at the same time another forward gear train comes into mesh or such that the reverse gear train GR is established and at the same time any one of the forward gear trains comes into mesh.

The collar portion 56a of the shift piece 56 and the side plate portion 58a of the interlock member 58 are formed with connecting portions 56b and 58e for the interlocking mechanism connected to the change lever 50, respectively. The shift operation of the change lever 50 is transmitted as the axial movement of the shift select shaft 52 through the interlocking mechanism to the connecting portion 56b, thereby axially moving the shift select shaft 52 in concert with the shift operation. Further, the select operation of the change lever 50 is transmitted as the rotational movement of the shift select shaft 52 through the interlocking mechanism to the connecting portion 58e, thereby rotating the shift select shaft 52 in concert with the select operation.

It may be considered to support the reverse fork 60 to the shift select shaft 52 as similar to the shift forks 54-1, 54-2, and 54-3 and to operate the reverse fork 60 with the shift piece 56. However, the reverse shaft 46 is located opposite to the shift select shaft 52 with respect to the main shaft 4 as shown in FIG. 2. Accordingly, in consideration of the interference with the main shaft 4, the reverse fork 60 cannot be supported to the shift select shaft 52.

In this respect, a reverse fork shaft 60a extending in parallel to a direction perpendicular to the axis of the shift select shaft 52 is arranged so as to bypass the main shaft 4. The reverse fork 60 is fixed to an end portion of the reverse fork shaft 60a on the reverse shaft 46 side, and a reverse fork operating member 60b is fixed to the other end portion of the reverse fork shaft 60a on the shift select shaft 52 side. The reverse fork operating member 60b is formed with a recess 60c, and a reverse piece 62 engageable with the recess 60c is fixed at a collar portion 62a as a base portion to the shift select shaft 52. The reverse piece 62 undergoes the select action and the shift action in a manner integral with the shift piece 56.

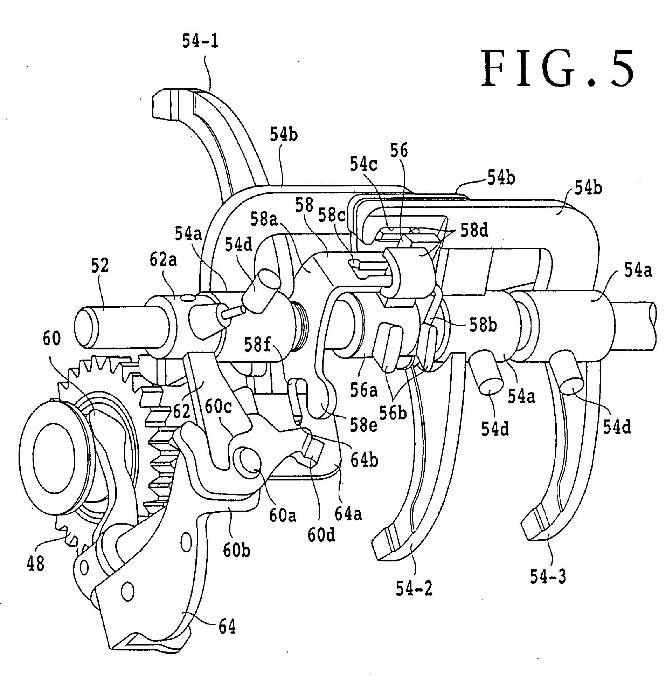

When the shift piece 56 performs the shift action to the reverse position R at the reverse select position P4, the reverse fork 60 is rotationally displaced from the neutral position shown in FIG. 4 to the operational position shown in FIG. 5 by the operation of the reverse piece 62 through the reverse fork operating member 60b and the reverse fork shaft 60a. As a result, the reverse idler gear 48 is displaced to the mesh position where it meshes with the reverse drive gear 42 and the reverse driven gear 44, thus establishing the reverse gear train GR. If the reverse piece 62 engages with the reverse fork operating member 60b even at any one of the forward select positions P1 to P3, the reverse gear train GR is undesirably established in establishing any forward gear train by the shift action at any one of the forward select positions P1 to P3.

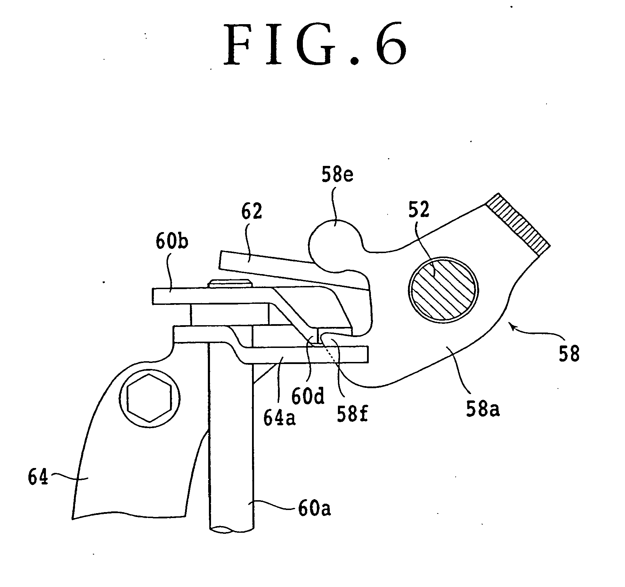

To cope with this problem, the reverse fork operating member 60b is arranged in the same plane as the plane of rotational displacement of the reverse piece 62 when the shift piece 56 is located at the reverse select position P4. When the shift piece 56 is located at any one of the other select positions P1 to P3, the reverse piece 62 is deviated outside from the outer side surface of the reverse fork operating member 60b as shown in FIG. 6, thereby preventing inadvertent engagement of the reverse piece 62 with the reverse fork operating member 60b. The reverse fork shaft 60a is supported to a bracket 64 mounted on the transmission case 2. The bracket 64 has a side plate portion 64a arranged inside of the reverse fork operating member 60b adjacent thereto. The side plate portion 64a is formed with an engagement groove 64b extending from the side edge of the side plate portion 64a along the shift select shaft 52 in a direction perpendicular to the axis of the shift select shaft 52.

The side plate portion 58a of the interlock member 58 is formed with a reverse restriction portion 58f engaging with the engagement groove 64b. Accordingly, the interlock member 58 is constrained by the side plate portion 64a of the bracket 64 so as to be unmovable in the axial direction of the shift select shaft 52. When the shift piece 56 is located at the reverse select position P4, the reverse restriction portion 58f is retracted from the outer side surface of the side plate portion 64a of the bracket 64 (the reverse restriction portion 58f yet engaging with the engagement groove 64b). When the shift piece 56 is located at any one of the forward select positions P1 to P3, the reverse restriction portion 58f is inserted through the engagement groove 64b to project from the outer side surface of the side plate portion 64a of the bracket 64.

The reverse fork operating member 60b is formed with an arm portion 60d extending to the position of the engagement groove 64b in contact with the outer side surface of the side plate portion 64a of the bracket 64. When the shift piece 56 is located at any one of the forward select positions P1 to P3, the arm portion 60d abuts against the reverse restriction portion 58f projecting from the outer side surface of the side plate portion 64a as shown in FIG. 6, thereby preventing the rotational displacement of the reverse fork 60 in the direction of establishment of the reverse gear train GR.

Accordingly, it is possible to prevent the occurrence of double mesh of any forward gear train and the reverse gear train GR due to inadvertent movement of the reverse fork 60 by vibrations or the like. When the shift piece 56 is located at the reverse select position P4, the reverse restriction portion 58f is retracted from the outer side surface of the side plate portion 64a, so that the arm portion 60d does not abut against the reverse restriction portion 58f, thus allowing the rotational displacement of the reverse fork 60 in the direction of establishment of the reverse gear train GR.

According to this preferred embodiment, the shift forks 54-1, 54-2, and 54-3 for the forward gear trains, the shift piece 56, and the interlock member 58 are all supported to the shift select shaft 52. Accordingly, it is unnecessary to provide any support shafts for the shift forks and any support shafts for the shift piece 56 and the interlock member 58. As a result, the number of parts can be reduced to thereby reduce the weight and cost of the speed-change operation mechanism for the manual transmission.

A speed-change operation mechanism for a manual transmission, including a shift select shaft rotatable by a select operation of a speed-change operation member and axially movable by a shift operation of the speed-change operation member, and a plurality of shift forks for forward gear trains, mounted on the shift select shaft so as to be relatively rotatable and axially movable. A shift piece is fixed to the shift select shaft. The shift piece is operated in concert with the shift operation of the speed-change operation member to establish a selected one of the forward gear trains. Further, an interlock member is mounted on the shift select shaft so as to be nonrotatable and axially movable. The interlock member is operated in concert with the select operation of the speed-change operation member to establish a selected one of select positions.

## Claims

1. A speed-change operation mechanism for a manual transmission, comprising:
a speed-change operation member (50);
a shift select shaft (52) rotatable by a select operation of said speed-change operation member (50) and axially movable by a shift operation of said speed-change operation member (50) ;
a plurality of shift forks (54-1, 54-2, 54-3) for forward gear trains (G1, G2, G3) , mounted on said shift select shaft (52) so as to be relatively rotatable and axially movable;
a shift piece (56) fixed to said shift select shaft (52) and adapted to perform a shift action in concert with the shift operation of said speed-change operation member (50), so that said shift piece (56) selectively engages with one of said shift forks (54-1, 54-2, 54-3) to axially displace said selected shift fork (54-1, 54-2, 54-3) from a neutral position, thereby establishing a selected one of said forward gear trains (G1, G2, G3);
an interlock member(58) mounted on said shift select shaft (52) so as to be relatively nonrotatable and axially movable and adapted to rotate said shift select shaft (52) in concert with the select operation of said speed-change operation member (50), thereby establishing a selected one of select positions; and
means (58f, 64a, 64b) for constraining said interlock member axially unmovable,
**characterized in that**
the shift operation of the speed-change operation member (50) is transmitted as the axial movement of the shift select shaft (52) through an interlocking mechanism to a connecting portion (56b) of the shift piece (56).

2. A speed-change operation mechanism for a manual transmission according to claim 1, wherein said interlock member (58) comprises a pair of side plates (58a, 58b) splined to said shift select shaft (52) so as to interpose said shift piece (56), a slit (58c) for insertion of said shift piece (56), and a pair of lock pawls (58d) for engaging any of said shift forks (54-1, 54-2, 54-3), which said shift piece (56) is not engaged, thereby constraining said shift forks (54-1, 54-2, 54-3) at their neutral positions.

## Patentansprüche

1. Gangwechsel-Betriebsmechanismus für ein Schaltgetriebe, umfassend:
ein Gangwechsel-Betriebselement (50);
eine Umschalt-Auswahlwelle (52), die durch eine Auswahl-Operation des Gangwechsel-Betriebselements (50) drehbar ist und durch eine Umschalt-Operation des Gangwechsel-Betriebselements (50) axial beweglich ist,
eine Mehrzahl von Umschalt-Gabeln (54-1, 54-2, 54-3) für Vorwärts-Getriebezüge (G1, G2, G3), die auf der Umschalt-Auswahlwelle (52) angebracht sind, um relativ drehbar und axial beweglich zu sein;
ein Umschalt-Stück (56), das an der Umschalt-Auswahlwelle (52) fixiert ist und dafür angepasst ist, eine Umschalt-Aktion in Übereinstimmung mit der Umschalt-Operation des Gangwechsel-Betriebselements (50) durchzuführen, so dass das Umschalt-Stück (56) selektiv in eine der Umschalt-Gabeln (54-1, 54-2, 54-3) eingreift, um die ausgewählte Umschalt-Gabel (54-1, 54-2, 54-3) von einer neutralen Position axial zu bewegen, wodurch ein Ausgewählter der Vorwärts-Getriebezüge (G1, G2, G3) gebildet wird;
ein Arretierungselement (58), das auf der Umschalt-Auswahlwelle (52) angebracht ist, um relativ nicht-drehbar und axial beweglich zu sein,
und das dafür angepasst ist, die Umschalt-Auswahlwelle (52) in Übereinstimmung mit der Auswahl-Operation des Gangwechsel-Betriebselements (50) zu drehen, wodurch eine Ausgewählte von ausgewählten Positionen gebildet wird, und
Mittel (58f, 64a, 64b) zum axialen Festhalten des Arretierungselements,
**dadurch gekennzeichnet, dass** die Umschalt-Operation des Gangwechsel-Betriebselements (50) als die axiale Bewegung der Umschalt-Auswahlwelle (52) durch einen Arretierungs-Mechanismus zu einem Verbindungsabschnitt (56b) des Umschalt-Stückes (56) übertragen wird.

2. Gangwechsel-Betriebsmechanismus für ein Schaltgetriebe nach Anspruch 1,
wobei das Arretierungselement (58) ein Paar Seitenplatten (58a, 58b) umfasst, die mit der Umschalt-Auswahlwelle (52) verkeilt sind, um das Umschalt-Stück (56) zwischenzuschalten, einen Schlitz (58c) zum Einfügen des Umschalt-Stückes (56), und ein Paar von Schließ-Klinken (58d) zum In-Eingriff-Bringen einer der Umschalt-Gabeln (54-1, 54-2, 54-3), welches Umschalt-Stück (56) nicht in Eingriff ist, wodurch die Umschalt-Gabeln (54-1, 54-2, 54-3) in ihren neutralen Positionen festgehalten werden.

## Revendications

1. Mécanisme de changement de vitesse pour une transmission manuelle, comprenant :
un organe de changement de vitesse (50) ;
un arbre de sélection de changement de vitesse (52) pouvant tourner par une opération de sélection dudit organe de changement de vitesse (50) et pouvant bouger axialement par une opération de déplacement dudit organe de changement de vitesse (50) ;
une pluralité de fourchettes de boîte (54-1, 54-2, 54-3) pour des trains de marche avant (G1, G2, G3), montées sur ledit arbre de sélection de changement de vitesse (52) de sorte à être relativement rotatives et axialement mobiles ;
une pièce de déplacement (56) fixée audit arbre de sélection de changement de vitesse (52) et adaptée pour exécuter une action de déplacement de concert avec l'opération de déplacement dudit organe de changement de vitesse (50), de sorte que ladite pièce de déplacement (56) vient sélectivement en prise avec l'une desdites fourchettes de boîte (54-1, 54-2, 54-3) pour déplacer axialement ladite fourchette de boîte sélectionnée (54-1, 54-2, 54-3) depuis un point mort, mettant ainsi en place un train sélectionné desdits trains d'engrenage avant (G1, G2, G3);
un organe de verrouillage (58) monté sur ledit arbre de sélection de changement de vitesse (52) de sorte à être relativement non rotatif et axialement mobile et adapté pour faire tourner ledit arbre de sélection de changement de vitesse (52) de concert avec l'opération de sélection dudit organe de changement de vitesse (50), établissant ainsi une position sélectionnée des positions de sélection ; et
un moyen (58f, 64a, 64b) pour contraindre ledit organe de verrouillage de manière non axialement mobile,
**caractérisé en ce que**
l'opération de déplacement de l'organe de changement de vitesse (50) est transmise en tant que mouvement axial de l'arbre de sélection de changement de vitesse (52) à travers un mécanisme de verrouillage à une portion de raccordement (56b) de la pièce de déplacement (56).

2. Mécanisme de changement de vitesse pour une transmission manuelle selon la revendication 1, dans lequel ledit organe de verrouillage (58) comprend une paire de plaques latérales (58a, 58b) cannelées par rapport audit arbre de sélection de changement de vitesse (52) de sorte à interposer ladite pièce de déplacement (56), une fente (58c) pour l'insertion de ladite pièce de déplacement (56), et une paire de cliquets de blocage (58d) pour mettre en prise l'une quelconque desdites fourchettes de boîte (54-1, 54-2, 54-3), laquelle pièce dé déplacement (56) n'est pas mise en prise, contraignant ainsi lesdites fourchettes de boîte (54-1, 54-2, 54-3), dans leur point mort.
